# EUROPEAN PATENT APPLICATION

(11) **EP 2 338 734 A1**
(43) Date of publication of application: **29.06.2011**
(21) Application number: 09808092.2
(22) Date of filing: 29.01.2009
(51) Int. Cl.: B60Q 11/00

(54) **DEVICE FOR CONTROLLING BLINKERS FOR VEHICLE**

(30) Priority: 19.08.2008 JP 2008210391
(71) Applicant: Sumitomo Wiring Systems, Ltd., Yokkaichi-shi, Mie 510-8503 (JP)
(72) Inventor: ENDOU, Takeshi, Yokkaichi-shi Mie 510-8503 (JP)
(74) Representative: Gendron, Vincent Christian
(86) International application number: PCT/JP2009/051446
(87) International publication number: WO 2010/021156

(57) **Abstract**

A control device for a vehicle flasher assembly comprises: an informing circuit for informing a disconnection state of any one of main flashers out of vehicle flasher assembly including a left front part main flasher disposed at a left position on a front part of a motor vehicle, a left rear part main flasher disposed at the left position on a rear part of the vehicle, a left side part sub-flasher disposed at the left position on a side part of the vehicle, a right front part main flasher disposed at a right position on the front part of the vehicle, a right rear part main flasher disposed at the right position on the rear part of the vehicle, and a right side part sub-flasher disposed at the right position on the side part of the vehicle; a plurality of drive circuits for lighting up each flasher of flasher assembly, respectively; a plurality of current detecting circuits provided in correspondence with the left front part main flasher, left rear part main flasher, right front part main flasher, and right rear part main flasher, each of current detecting circuits being adapted to detect a load current that flows in each of correspondence main flashers; and a control circuit for causing drive circuits to light up either the left front part, rear part, and side part flashers or the right front part, rear part, and side part flashers in response to an operation of a vehicle driver, for comparing a detected result from each of current detecting circuits corresponding to lighted flashers with a predetermined common threshold value, and for causing informing circuit to inform a disconnection state to the vehicle driver when detected result is less than common threshold value. The left side part sub-flasher is connected in parallel to either the left front part main flasher or the left rear part main flasher. The right side part sub-flasher is connected in parallel to either the right front part main flasher or the right rear part main flasher.

## Description

### FIELD OF THE INVENTION

This invention relates to a control device for a vehicle flasher assembly that serves as an electronic control unit (ECU) provided with a so-called flasher control function.

### BACKGROUND OF THE INVENTION

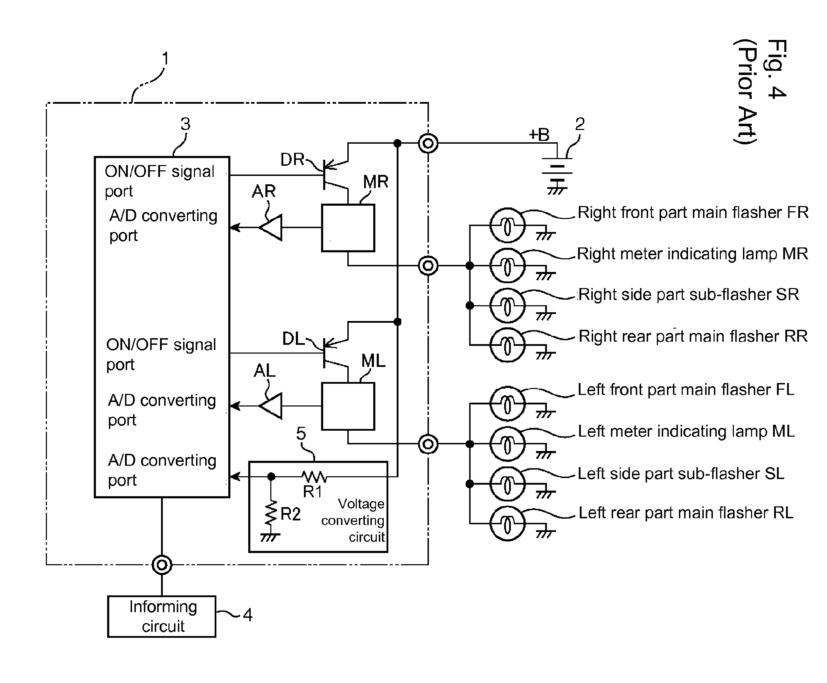

A control device for a vehicle flasher assembly controls to blink the vehicle flasher assembly. One of important functions of the control device is to detect a disconnection state in the flashers. Figure 4 is a block diagram that illustrates an electrical structure of a typical ECU 1 for a vehicle flasher assembly in a prior art. A motor vehicle is provided with a vehicle flasher assembly including a right front part main flasher FR disposed at a right position on a front part of a motor vehicle and a left front part main flasher FL disposed at a left position at the front part of the vehicle, a right rear part main flasher RR disposed at the right position on a rear part of the vehicle and a left rear part main flasher RL disposed at the left position on the rear part of the vehicle, a right side part sub-flasher SR disposed at the right position at a side part of the vehicle and a left rear part sub-flasher SL disposed at the left position on the side part of the vehicle, a right indicating lamp MR disposed on a meter board of the vehicle, and a left indicating lamp ML disposed on the meter board. A power supply voltage +B from a battery 2 is applied to the ECU 1. A control circuit 3 that is operated by a microcomputer generates ON/OFF signals from output ports to control an ON/OFF action of each of right and left flashers through each of right and left drive circuits DR and DL.

Specifically, a left front part main flasher FL, a left rear part main flasher RL, a left side part sub-flasher SL, and a left indicating lamp ML are connected in parallel to one another. A supply from the power supply voltage +B to theses flashers and the lamp is controlled together by the left drive circuit DL to blink the flashers and lamp. On the other hand, a right front part main flasher FR, a right rear part main flasher RR, a right side part sub-flasher SR, and a right indicating lamp MR are connected in parallel to one another. A supply from the power supply voltage +B to theses flashers and the lamp is controlled together by the right drive circuit DR to blink the flashers and lamp.

Furthermore, a left current detecting circuit CL is connected in series with the parallel circuit comprising the flashers FL, RL, SL, and lamp ML that serve as loads. A right current detecting circuit CR is connected in series with the parallel circuit comprising the flashers FR, RR, SR, and lamp MR that serve as loads.

When the respective flashers and lamps are lighted up, the control circuit 3 detects load currents by the current detecting circuits CL and CR to carry out the disconnection state detecting function. The detected load currents are amplified by amplifiers AL and AR and are applied to analog/digital (A/D) converting ports. If any detected load current becomes less than a predetermined threshold value, a disconnection state is detected and is informed from an output port to an informing circuit 4. Although the disconnection state is detected from only the main flashers FL, FR, RL, and RR, the sub-flasher SL and SR and the indicating lamps ML and MR are connected in parallel to one another since the flashers and lamps are controlled together by the common drive circuits DL and DR.

Generally speaking, there is a case where the main flashers FL, FR, RL, and RR and sub-flasher SL and SR use different wattages in accordance with vehicle specifications such as vehicle designs (vehicle type and grades) and destinations abroad, even if a motor vehicle has the same vehicle model. In particular, the main flashers FL, FR, RL, and RR in a popular vehicle model have ten or so kinds of wattages. As a power supply voltage +B becomes lower, a current that flows in the flasher becomes smaller even if the flasher is same.

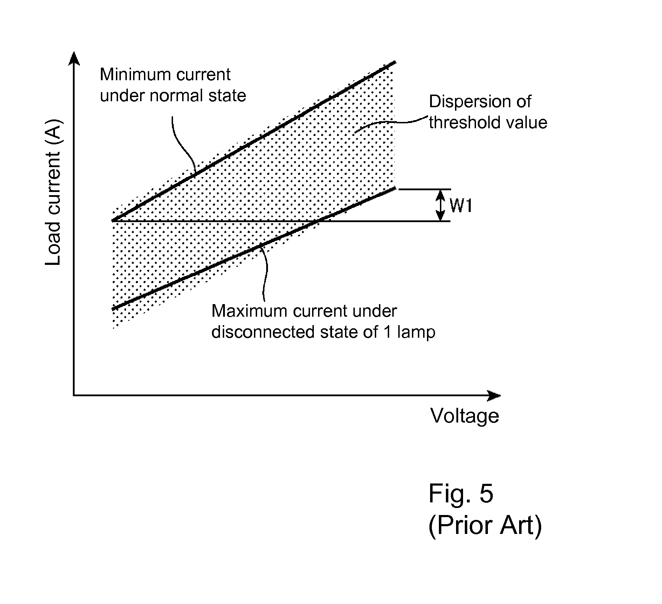

Accordingly, as shown in Figure 5, the minimum value of a current detected by the current detecting circuits CL and CR, in a normal state where any one of flashers connected in parallel to one another is not disconnected, is lower than the maximum value of a current detected by the current detecting circuit CL or CR, in a disconnection state where any one of flashers is disconnected. This will cause a competitive range W1. Consequently, it is necessary to change a threshold value for detecting a disconnection state in response to the power supply voltage +B. Thus, the control circuit 3 takes the power supply voltage +B from the analog/digital converting ports through a voltage converting circuit 5 comprising potential dividing resistances R1 and R2 and reads out a suitable current threshold value for the disconnection state by referring to a threshold value table in response to the power supply voltage +B.

However, there is a possibility that the threshold value disperses in a shaded area in Figure 5 on account of errors in reading the current detecting circuits CL and CR or the voltage converting circuit 5 and an erroneous detection of a disconnection state will occur. In fact, the ECUs having different threshold values for disconnection state detection current are used in response to the kinds of the main flashers FL, FR, RL, and RR. However, there is a problem that a control of the ECUs 1 is complicated on account of many kinds of ECUs 1.

In order to handle the above problems, Patent Document 1 has disclosed a method for correcting a threshold value for a disconnection state detection in a control device for a vehicle flasher assembly. According to this prior art, a current proportional to a current that flows in a drive circuit is applied to a CPU as a monitor current and a detection of disconnection state can be carried out by comparing the monitor current with a predetermined threshold value. A detecting device is connected to the control device for a vehicle flasher assembly upon shipment so that a theoretical value of the monitor current upon a disconnection state is determined on the basis of the power supply voltage +B, a circuit parameter, or the like. A current is measured when an actual disconnection state occurs and a difference between the theoretical value and the actually measured value is set before hand. Thus, the predetermined threshold value is corrected by the difference so that an accurate disconnection state detection can be carried out in response to dispersion of elements.

In the prior art described above, although it is possible to restrain a kind of ECU from increasing, there is a problem that a complicated adjustment step is required.
Patent Document 1: JP 2007-15654 A

### SUMMARY OF THE INVENTION

An object of the present invention is to provide a control device for a vehicle flasher assembly that can be used to control a plurality of kinds of flashers without increasing a kind of control device and can easily enhance a precision of disconnection state detection without involving a complicated adjustment.

A control device for a vehicle flasher assembly in accordance with a first aspect of the present invention comprises: an informing circuit for informing a disconnection state of any one of main flashers out of vehicle flasher assembly including a left front part main flasher disposed at a left position on a front part of a motor vehicle, a left rear part main flasher disposed at the left position on a rear part of the vehicle, a left side part sub-flasher disposed at the left position on a side part of the vehicle, a right front part main flasher disposed at a right position on the front part of the vehicle, a right rear part main flasher disposed at the right position on the rear part of the vehicle, and a right side part sub-flasher disposed at the right position on the side part of the vehicle; a plurality of drive circuits for lighting up each flasher of the flasher assembly, respectively; a plurality of current detecting circuits provided in correspondence with the left front part main flasher, the left rear part main flasher, the right front part main flasher, and the right rear part main flasher, each of the current detecting circuits being adapted to detect a load current that flows in each of the correspondence main flashers; and a control circuit for causing the drive circuits to light up either the left front, rear part, and side part flashers or the right front part, rear part, and side part flashers in response to an operation of a vehicle driver, for comparing a detected result from each of the current detecting circuits corresponding to the lighted flashers with a predetermined common threshold value, and for causing the informing circuit to inform a disconnection state to the vehicle driver when the detected result is less than the common threshold value. The left side part sub-flasher is connected in parallel to either the left front part main flasher or the left rear part main flasher to define a left parallel circuit. The current detecting circuit provided in correspondence with the left main flasher connected in parallel to the left side part sub-flasher is adapted to detect a load current that flows in the left parallel circuit including the left side part sub-flasher. The right side part sub-flasher is connected in parallel to either the right front part main flasher or the right rear part main flasher to define a right parallel circuit. The current detecting circuit provided in correspondence with the right main flasher connected in parallel to the right side part sub-flasher is adapted to detect a load current that flows in the right parallel circuit including the right side part sub-flasher.

According to the above construction, the control device controls a blinking operation of the vehicle flasher assembly and causes the informing circuit to inform the vehicle driver about the disconnection state in the flasher when the disconnection state is detected. The individual current detecting circuits are provided in correspondence with four flashers that are disposed at the right and left positions on front and rear parts and have relatively great load currents. Thus, the current detecting circuits can detect the disconnection state in the flasher. The right and left side part sub-flashers, in which relatively small currents flow, are connected in parallel to the flashers disposed at the same position on the front or rear part.

In order to detect the disconnection state in the flasher, the individual current detecting circuits provided in correspondence with the four main flashers compare the load currents in the lighted flashers with the predetermined threshold value. Accordingly, it is possible to broadly determine whether or not the load currents flow. Even if the different wattages are caused in the flashers on account of the different specifications, or even if fluctuations of the battery voltage or errors in the current detecting circuits are caused, it is possible to accurately detect the disconnection state by using the common threshold value. Thus, it is possible to use the common control device for the vehicle flasher assembly without involving a complicated adjustment due to the different specifications. It is also possible to eliminate a detecting circuit for the battery voltage.

### BRIEF DESCRIPTION OF THE DRAWINGS

[Fig. 1] Figure 1 is an electrical block diagram of an embodiment of an ECU for a vehicle flasher assembly in accordance with the present invention.
[Fig. 2] Figure 2 is an electrical block diagram of an alteration of the ECU for the vehicle flasher assembly shown in Figure 1.
[Fig. 3] Figure 3 is a graph that illustrates changes of flasher load currents on a normal load state and on a disconnection state in the embodiment shown in Figure 1.
[Fig. 4] Figure 4 is an electrical block diagram of a conventional ECU for a vehicle flasher assembly.
[Fig. 5] Figure 5 is a graph that illustrates changes of flasher load currents on a normal load state and on a disconnection state in the conventional ECU shown in Figure 4.

### PREFERRED ASPECTS OF EMBODYING THE INVENTION

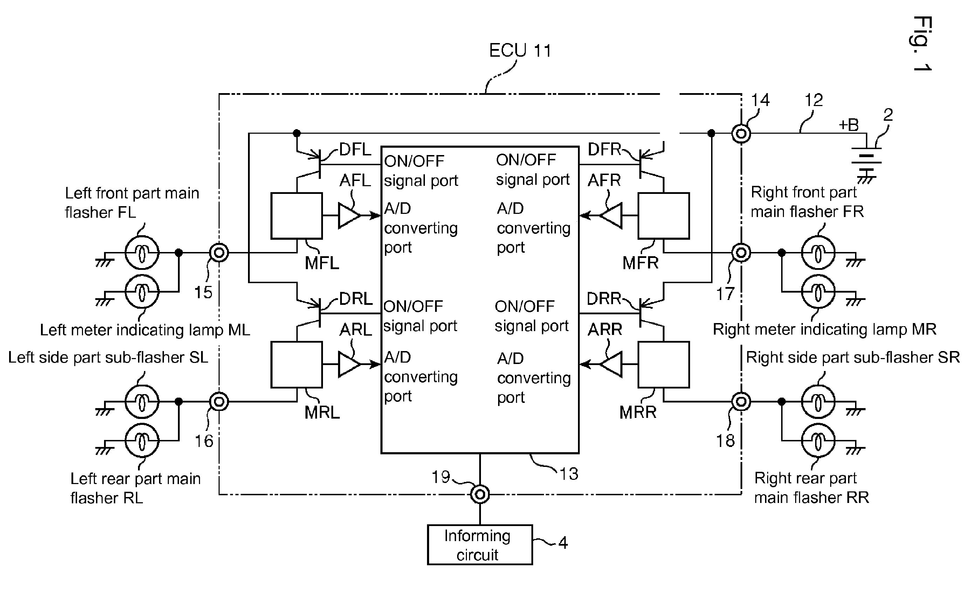

Figure 1 is an electrical block diagram of an embodiment of an ECU (electronic control unit) 11 that is an example of a control device for a vehicle flasher assembly in accordance with the present invention. A motor vehicle is provided with a vehicle flasher assembly including a left front part main flasher FL disposed at a left position on a front part of a motor vehicle, a right front part main flasher FR disposed at a right position on a front part of the vehicle, a left rear part main flasher RL disposed at a left position on a rear part of the vehicle, a right rear part main flasher RR disposed at a right position on a rear part of the vehicle, a left side part sub-flasher SL disposed at the left position on a side part of the vehicle, a right side part sub-flasher SR disposed at the right position on the side part of the vehicle, and a left meter indicating lamp ML disposed on a meter board of the vehicle, and a right meter indicating lamp MR disposed on the meter board of the vehicle. A power supply voltage +B from a battery 2 is applied to the ECU 11. The above structure of the ECU 11 shown in Figure 1 is the same as that of the ECU 1 shown in Figure 4.

The following structure should be noted. That is, in the present embodiment, individual drive circuits DFR, DFL, DRR, and DRL and the current detecting circuits MFR, MFL, MRR, and MRL are provided in the ECU 11 with respect to the right and left and front and rear part main flashers FR, FL, RR, and RL in which a relatively great load current flow, respectively. For example, a control circuit 13 that includes a microcomputer controls the respective circuits and detects disconnection states in the respective flashers, the side part sub-flasher SR and SL, in which relative small load currents flow, are connected in parallel to the main flashers RR and RL at the right and left positions on the rear parts, and the right and left meter indicating lamps MR and ML, in which relatively small load currents flow, are connected in parallel to the main flashers FR and FL at the right and left positions on the front parts.

Specifically, the ECU 11 includes a connecting terminal 14 to be connected to the battery 2, a second left connecting terminal 15 to be connected to a parallel circuit having the left front part main flasher FL and the left meter indicating lamp ML, a first left connecting terminal 16 to be connected to a parallel circuit having the left side part sub-flasher SL and the left rear part main flasher RL, a second right connecting terminal 17 to be connected to a parallel circuit having the right front part main flasher FR and the right meter indicating lamp MR, a first right connecting terminal 18 to be connected to a parallel circuit having the right side part sub-flasher SR and the right rear part main flasher RR, and a connecting terminal 19 to be connected to the informing circuit 4.

The informing circuit 4 includes, for example, a light emitting diode (LED) or a liquid crystal display (LCD).

The connecting terminal 14 is connected through a drive circuit (second left switching element) DFL and a current detecting circuit (second left current detecting circuit) MFL to the second left connecting terminal 15. The connecting terminal 14 is connected through a drive circuit (first left switching element) DRL and a current detecting circuit (first left current detecting circuit) MRL to the first left connecting terminal 16. The connecting terminal 14 is connected through a drive circuit (second right switching element) DFR and a current detecting circuit (second right current detecting circuit) MFR to the second right connecting terminal 17. Furthermore, the connecting terminal 14 is connected through a drive circuit (first right switching element) DRR and a current detecting circuit (first right current detecting circuit) MRR to the first right connecting terminal 18.

Thus, a current supply to the left front part main flasher FL and left meter indicating lamp ML is controlled by the drive circuit DFL. A current that flows in the left front part main flasher FL and left meter indicating lamp ML is detected by the current detecting circuit MFL. A current supply to the left side part sub-flasher SL and left rear part main flasher RL is controlled by the drive circuit DRL. A current that flows in the left side part sub-flasher SL and left rear part side part main flasher RL is detected by the current detecting circuit MRL.

A current supply to the right front part main flasher FR and right meter indicating lamp MR is controlled by the drive circuit DFR. A current that flows in the right front part main flasher FR and right meter indicating lamp MR is detected by the current detecting circuit MFR. A current supply to the right side part sub-flasher SR and right rear part main flasher RR is controlled by the drive circuit DRR. A current that flows in the right side part sub-flasher SR and right rear side part main flasher RR is detected by the current detecting circuit MRR.

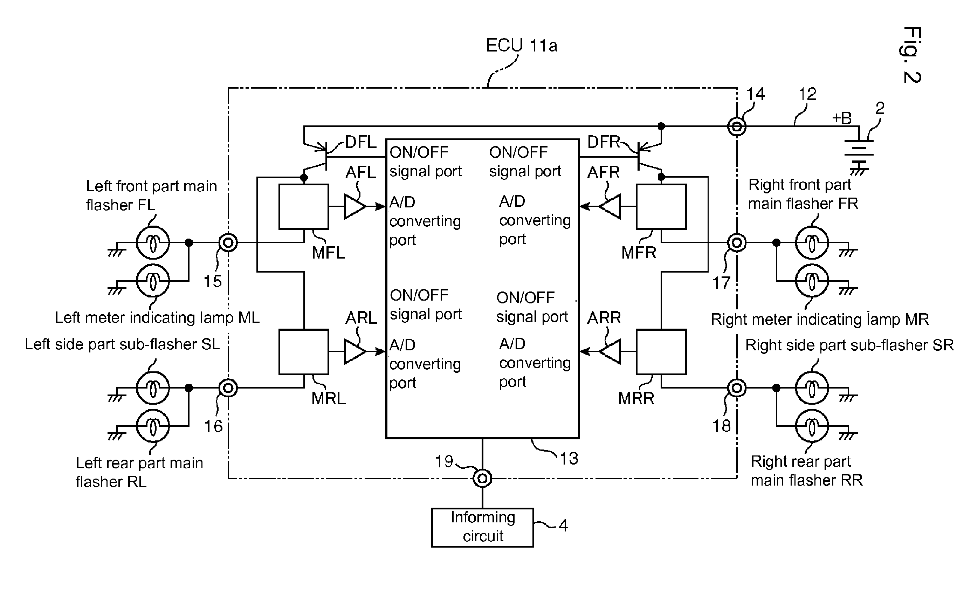

In the present invention, at least current detecting circuits MFL, MFR, MRL, and MRR may be provided in correspondence with the respective main flashers FL, FR, RL, and RR. In the case where the switching elements (power transistors or power MOSFETs) that are utilized as the drive circuits have sufficient capacities, as shown in, for example, Figure 2, the drive currents to the left front part and rear part main flashers FL and RL, the left side part sub-flasher SL, and the left indicating lamp ML may be turned on and off by only one drive circuit DFL, and the drive currents to the right front part and rear part main flashers FR and RR, the right side part sub-flasher SR, and the right indicating lamp MR may be turned on and off by only one left drive circuit DFL.

Specifically, as shown in Figure 2, the ECU 11a does not include the drive circuits DRL and DRR. In the ECU 11a, by connecting the first left connecting terminal 16 through the current detecting circuit MRL to the drive circuit (left switching element) DFL, and by connecting the first right connecting terminal 18 through the current detecting circuit MRR to the drive circuit (right switching element) DFR, the drive currents to the left front part and rear part main flashers FL and RL, the left side part sub-flasher SL, and the left indicating lamp ML may be turned on and off by only one drive circuit DFL, and the drive currents to the right front part and rear part main flashers FR and RR, the right side part sub-flasher SR, and the right indicating lamp MR may be turned on and off by only one right drive circuit DFR.

The drive circuits DFL, DFR, DRL, and DRR comprise switching elements interposed in series between the connecting terminal 14 to which a power supply line 12 from the battery 2 is connected and the respective flashers FL, ML, FR, MR, RL, SL, RR, and SR combined in the above manner. The drive circuits DFL, DFR, DRL, and DRR control and blink the respective right, left and front part, rear part flashers FR, RR, FL, RL, SR and right, left lamps MR, ML all together in response to ON/OFF signals from output ports of the control circuit 13 that includes, for example, a microcomputer.

Load currents supplied from the drive circuits DFL, DFR, DRL, and DRR are detected by the current detecting circuits MFL, MFR, MRL, and MRR and are amplified by amplifiers AFL, AFR, ARL, and ARR, and are read in the analog/digital converting ports in the control circuit 13. Although the four output ports in the control circuit 13 are provided in connection with the drive circuits DFL, DFR, DRL, and DRR in the ECU 11 shown in Figure 1, respectively, the drive circuits DFL, DRL in the left side and the drive circuits DFR, DRR in the right side may be driven by the ON/OFF signals from the common output ports.

In the ECU 11 constructed above, wattages of the right and left front part main flashers FR and FL are, for example, 21 to 28 W. Wattages of the right and left rear part main flashers RR and RL are, for example, 21 W. Wattages of the right and left side part sub-flasher SR and SL are, for example, 1.6 to 5 W. Wattages of the right and left meter indicating lamps MR and ML are the order of mW (milliwatts). A nominal voltage +B of the battery 2 is, for example, 12V.

Thus, the currents that flow in the main flashers FL and FR are within a range of 1.8 to 2.3A. The currents that flow in the main flashers RL and RR are 1.8A. The currents that flow in the sub-flasher SL and SR are within a range of 0.1 to 0.4A. Since the currents that flow in the indicating lamps ML and MR are the order of several milliamperes (less than 9 mA), the currents are negligible.

When any lamp is under a normal state in which any flasher is not disconnected, the current that flows in the parallel circuit comprising the main flasher FL and indicating lamp ML and the current that flows in the parallel circuit comprising the main flasher FR and indicating lamp MR (that is, the currents detected by the current detecting circuits MFL and MFR) are in the range of 1.8 to 2.3A. Under the same state, the current that flows in the parallel circuit comprising the sub-flasher SL and main flasher RL and the current that flows in the parallel circuit comprising the sub-flasher SR and main flasher RR (that is, the currents detected by the current detecting circuits MRL and MRR) are in the range of 1.9 to 2.7A.

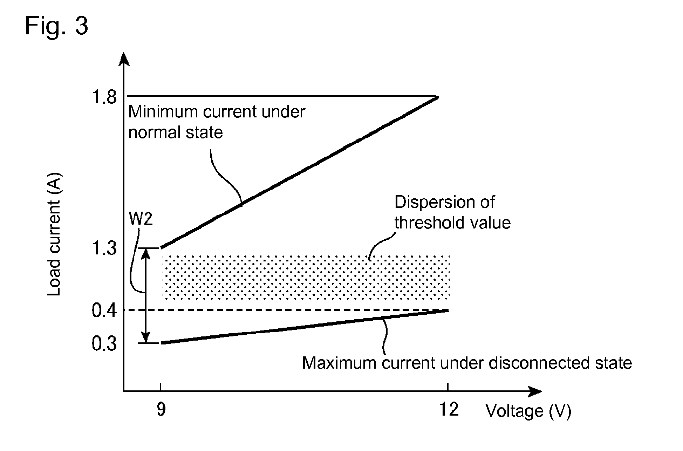

Thus, under the normal state, the minimum current detected by the current detecting circuits MFL, MFR, MRL, and MRR is 1.8A when the voltage +B is 12V, as shown in Figure 3. When the output voltage +B of the battery 2 happens to lower to 9V, the minimum current detected by the current detecting circuits MFL, MFR, MRL, and MRR is 1.3A.

Accordingly, a threshold value Vth for detecting the disconnection state in each of the main flashers FL, FR, RL, and RR in accordance with the currents detected by the current detecting circuits MFL, MFR, MRL, and MRR must be set to be less than 1.3A that is the minimum current when any lamp is not disconnected, at a lower limit of the output voltage of the battery 2.

If any one of the main flashers FL, FR, RL, and RR is disconnected, the maximum current detected by the current detecting circuits MFL, MFR, MRL, and MRR is 0.4A when the output voltage +B is 12V. Accordingly, the threshold value Vth in the upper limit of the output voltage of the battery 2 must be set over the maximum current of 0.4A when any one of the main flashers FL, FR, RL, and RR is disconnected.

Thus, the threshold value Vth is set to be, for example, 1.1 to 1.2A. If the load current becomes less than the threshold value Vth when lighting up the above respective main lamps, the control circuit 13 informs the vehicle driver about the disconnection state through, for example, the informing circuit 4. In this case, the connecting terminal 19 to be connected to the control circuit 13 and a signal output port in the control circuit 13 to the informing circuit 4 constitute one example of an informing circuit.

As constructed above, since four individual current detecting circuits MFL, MFR, MRL, and MRR are provided on four main flashers FL, FR, RL, and RR in order that the control circuit 13 detects the disconnection state, respectively, it is possible to broadly determine whether or not the load current flows. Even if the wattages between the main flashers FL, FR, RL, and RR are different on account of different specifications, or even if the power supply voltage +B is changed or the current detecting circuits MFL, MFR, MRL, and MRR cause errors, it is possible to accurately detect the disconnection state by using the common threshold value.

That is, as shown in Figure 3, since there is a sufficient difference W2 between a load current under a normal load state in which any one of the main flashers FL, FR, RL, and RR is not disconnected and a load current under an abnormal load state in which any one of the main flashers is disconnected, it is possible to accurately detect the disconnection state, even if the threshold values are dispersed in some degree. Accordingly, it is possible to use a common ECU 11 for different specifications without involving complicated adjustment. It is also possible to eliminate the voltage detecting circuit 5 for detecting the power supply voltage +B of the battery 2 that has been required for in the prior art described above and to eliminate the control table in the control circuit 3 that has been required for in the prior art.

As described above, the wattages of the front part main flashers FL and FR are greater than those of the rear part main flashers RL and RR generally. The wattages of the side part sub-flasher SL and SR are much greater than those of the meter indicating lamps ML and MR, although the wattages of the side part sub-flashers SL and SR are low. Accordingly, the side part sub-flasher SL and SR are connected in parallel to the rear part main flashers RL and RR at the same positions in order to control the blinking of the flashers including the side part sub-flashers, thereby enhancing a balance among four current detecting circuits MFL, MFR, MRL, and MRR and enhancing a precision in detecting of the disconnection state.

Since the wattages of the meter indicating lamps ML and MR are very small, the meter indicating lamps ML and MR may be connected in parallel to the rear part main flashers RL and RR to which the sub-flasher SL and SR are connected. However, it is possible to more enhance a balance among four current detecting circuits MFL, MFR, MRL, and MRR by connecting the meter indicating lamps ML and MR in parallel to the front part main flashers FL and FR that have the greater wattages than those of the rear part main flashers generally.

The ECU 11 of the present invention can be suitably applied to generally used flashers that have wattages of 20 to 30W by setting the threshold values for detecting the disconnection state to be 1.1 to 1.2A.

A control device for a vehicle flasher assembly in accordance with an aspect of the present invention comprises: an informing circuit for informing a disconnection state of any one of main flashers out of vehicle flasher assembly including a left front part main flasher disposed at a left position on a front part of a motor vehicle, a left rear part main flasher disposed at the left position on a rear part of the vehicle, a left side part sub-flasher disposed at the left position on a side part of the vehicle, a right front part main flasher disposed at a right position on the front part of the vehicle, a right rear part main flasher disposed at the right position on the rear part of the vehicle, and a right side part sub-flasher disposed at the right position on the side part of the vehicle; a plurality of drive circuits for lighting up each flasher of the flasher assembly, respectively; a plurality of current detecting circuits provided in correspondence with the left front part main flasher, the left rear part main flasher, the right front part main flasher, and the right rear part main flasher, each of the current detecting circuits being adapted to detect a load current that flows in each of the correspondence main flashers; and a control circuit for causing the drive circuits to light up either the left front, rear part, and side part flashers or the right front part, rear part, and side part flashers in response to an operation of a vehicle driver, for comparing a detected result from each of the current detecting circuits corresponding to the lighted flashers with a predetermined common threshold value, and for causing the informing circuit to inform a disconnection state to the vehicle driver when the detected result is less than the common threshold value. The left side part sub-flasher is connected in parallel to either the left front part main flasher or the left rear part main flasher to define a left parallel circuit. The current detecting circuit provided in correspondence with the left main flasher connected in parallel to the left side part sub-flasher is adapted to detect a load current that flows in the left parallel circuit including the left side part sub-flasher. The right side part sub-flasher is connected in parallel to either the right front part main flasher or the right rear part main flasher to define a right parallel circuit. The current detecting circuit provided in correspondence with the right main flasher connected in parallel to the right side part sub-flasher is adapted to detect a load current that flows in the right parallel circuit including the right side part sub-flasher.

According to the above construction, the control device controls a blinking operation of the vehicle flasher assembly and causes the informing circuit to inform the vehicle driver about the disconnection state in the flasher when the disconnection state is detected. The individual current detecting circuits are provided in correspondence with four flashers that are disposed at the right and left positions on front and rear parts and have relatively great load currents. Thus, the current detecting circuits can detect the disconnection state in the flasher. The right and left side part sub-flashers, in which relatively small currents flow, are connected in parallel to the flashers disposed at the same position on the front or rear part.

In order to detect the disconnection state in the flasher, the individual current detecting circuits provided in correspondence with the four main flashers compare the load currents in the lighted flashers with the predetermined threshold value. Accordingly, it is possible to broadly determine whether or not the load currents flow. Even if the different wattages are caused in the flashers on account of the different specifications, or even if fluctuations of the battery voltage or errors in the current detecting circuits are caused, it is possible to accurately detect the disconnection state by using the common threshold value. Thus, it is possible to use the common control device for the vehicle flasher assembly without involving a complicated adjustment due to the different specifications. It is also possible to eliminate a detecting circuit for the battery voltage.

Preferably, the control device for a vehicle flasher assembly further comprises: a first left connecting terminal to be connected to a first left parallel circuit including a left main flasher including either the left front part main flasher or the left rear part main flasher and the left side part sub-flasher; a second left connecting terminal to be connected to the other left main flasher; a first right connecting terminal to be connected to a first right parallel circuit including either the right front part main flasher or the right rear part main flasher and the right side part sub-flasher; and a second left connecting terminal to be connected to the right main flasher. The drive circuits comprises: a left drive circuit for supplying a load current to the first and second left connecting terminals to light up the left front part main flasher, the left rear part main flasher, and the left side part sub-flasher; and a right drive circuit for supplying a load current to the first and second right connecting terminals to light up the right front part main flasher, the right rear part main flasher, and the right side part sub-flasher. The plural current detecting circuits comprises: a first left current detecting circuit for detecting a current that flows in the first left connecting terminal; a second left current detecting circuit for detecting a current that flows in the second left connecting terminal; a first right current detecting circuit for detecting a current that flows in the first right connecting terminal; and a second right current detecting circuit for detecting a current that flows in the second right connecting terminal.

According to the above construction, since the first left connecting terminal is connected to the first left parallel circuit including either the left front part main flasher or the left rear part main flasher and the left side part sub-flasher and the first right connecting terminal is connected to the first right parallel circuit including either the right front part main flasher or the right rear part main flasher and the right side part sub-flasher, the first left connecting terminal and first right connecting terminal can light up the four flashers. Consequently, it is possible to decrease the number of the connecting terminals.

Since the first left connecting terminal is connected to the parallel circuit including either the left front part main flasher or the left rear part main flasher that is a target in disconnection state to be detected and the left side part sub-flasher that is not a target in disconnection state to be detected and has a smaller load current than the left front part main flasher and left rear part main flasher and the current that flows in the parallel circuit is detected by the first left current detecting circuit, it is possible to reduce an influence due to the left side part sub-flasher to the current detected by the first left current detecting circuit, while the number of the connecting terminals is decreased by the parallel circuit including the left side part sub-flasher and the other main flasher.

Similarly, it is possible to reduce an influence due to the right side part sub-flasher to the current detected by the first right current detecting circuit, while the number of the connecting terminals is decreased by the parallel circuit including the right side part sub-flasher and the other main flasher.

Thus, while the connecting terminals are restrained from increasing the number, it is possible to lower an influence due to the load current of the left side part sub-flasher and right side part sub-flasher to the currents detected by the first left current detecting circuit and the first right current detecting circuit. Consequently, it is possible to enhance a precision in determination of the disconnection state by the control circuit.

Preferably, in the control device for a vehicle flasher assembly, a left meter indicating lamp provided on a vehicle meter board is connected in parallel to either the left front part main flasher or the left rear part main flasher that is not connected in parallel to the left side part sub-flasher. The current detecting circuit provided in correspondence with a flasher connected in parallel to the left meter indicating lamp detects a load current that flows in a parallel circuit including the left meter indicating lamp. A right meter indicating lamp provided on the vehicle meter board is connected in parallel to either the right front part main flasher or the right rear part main flasher that is not connected in parallel to the right side part sub-flasher. The current detecting circuit provided in correspondence with a flasher connected in parallel to the right meter indicating lamp detects a load current that flows in a parallel circuit including the right meter indicating lamp.

According to the above construction, in order to control the blinking operation of the flashers including the meter indicating lamps provided on the meter board, the meter indicating lamp is connected to the flasher that is not connected to the side part sub-flasher and is the same side front or rear part flasher.

Accordingly, the meter indicating lamp flows a smaller current than the front or rear part flasher and is not a target in disconnection state to be detected. Since the meter indicating lamp is connected in parallel to the front or rear part main flasher and the current that flows in the parallel circuit is detected by the current detecting circuit, it is possible to reduce an influence to the current detected by the current detecting circuit.

Preferably, a parallel circuit including the other left main flasher and the left meter indicating lamp provided on the vehicle meter board are connected to the second left connecting terminal. A parallel circuit including the other right main flasher and the right meter indicating lamp provided on the vehicle meter board are connected to the second right connecting terminal.

According to the above construction, since the right and left main flashers are connected in parallel to the meter indicating lamps that flow smaller currents than those of the main flashers and that are not targets in disconnection state to be detected, and since the currents that flow in the parallel circuit are detected by the current detecting circuits, it is possible to lower an influence to the currents detected by the current detecting circuits without increasing the connecting terminals for connecting the indicating lamps.

Preferably, the left side part sub-flasher is connected in parallel to the left rear part main flasher. The right side part sub-flasher is connected in parallel to the right rear part main flasher. The left meter indicating lamp is connected in parallel to the left front part main flasher. The right meter indicating lamp is connected in parallel to the right front part main flasher.

According to the above construction, since the front part flashers have greater wattages than the rear flashers, the side part sub-flashers that have much greater wattages than the meter indicating lamps, although the side part sub-flashers have small wattages, are connected in parallel to the rear part flashers, thereby enhancing a balance among the four current detecting circuits and enhancing a precision in disconnection state to be detected.

Preferably, the left drive circuit comprises a first left switching element for supplying a load current through the first left current detecting circuit to the first left connecting terminal, and a second left switching element for supplying a load current through the second left current detecting circuit to the second left connecting terminal. The right drive circuit comprises a first right switching element for supplying a load current through the first right current detecting circuit to the first right connecting terminal, and a second right switching element for supplying a load current through the second right current detecting circuit to the second right connecting terminal.

Preferably, the left drive circuit is a left switching element for supplying a load current through the first left current detecting circuit to the first left connecting terminal and for supplying a load current through the second left current detecting circuit to the second left connecting terminal in parallel. The right drive circuit is a right switching element for supplying a load current through the first right current detecting circuit to the first right connecting terminal and for supplying a load current through the second right current detecting circuit to the second right connecting terminal in parallel.

According to the above construction, since the number of the switching elements is smaller than that of the connecting terminals, it is possible to lower a cost in production.

Preferably, the left front part main flasher and the right front part main flasher use a lamp having a load current in a range of 1.8 to 2.3A. The left rear part main flasher and the right rear part main flasher use a lamp having a load current of 1.8A. The left side part sub-flasher and the right side part sub-flasher use a lamp having a load current in a range of 0.1 to 0.4A. The right and left meter indicating lamps use a lamp having a load current of 9 mA. The threshold value is set to be in a range of 1.1 to 1.2A.

According to the above construction, the present invention can be applied to a flasher that is generally used in a battery voltage of 12V and a wattage of 20 to 30W.

As described above, the control device for the vehicle flasher assembly in accordance with the present invention controls a blinking operation of the vehicle flasher assembly and causes the informing circuit to inform the vehicle driver about the disconnection state in the flasher when the disconnection state is detected. The individual current detecting circuits are provided in correspondence with four flashers that are disposed at the right and left positions on front and rear parts and have relatively great load currents. Thus, the current detecting circuits can detect the disconnection state in the flasher. The right and left side part sub-flashers, in which relatively small currents flow, are connected in parallel to the flashers disposed at the same position on the front or rear part.

Accordingly, it is possible to broadly determine whether or not the load currents flow. Even if the different wattages are caused in the flashers on account of the different specifications, or even if fluctuations of the battery voltage or errors in the current detecting circuits are caused, it is possible to accurately detect the disconnection state by using the common threshold value. Thus, it is possible to use the common control device for the vehicle flasher assembly without involving a complicated adjustment due to the different specifications. It is also possible to eliminate a detecting circuit for the battery voltage.

## Claims

1. A control device for a vehicle flasher assembly comprising:
an informing circuit for informing a disconnection state of any one of main flashers out of vehicle flasher assembly including a left front part main flasher disposed at a left position on a front part of a motor vehicle, a left rear part main flasher disposed at the left position on a rear part of the vehicle, a left side part sub-flasher disposed at the left position on a side part of the vehicle, a right front part main flasher disposed at a right position on the front part of the vehicle, a right rear part main flasher disposed at the right position on the rear part of the vehicle, and a right side part sub-flasher disposed at the right position on the side part of the vehicle;
a plurality of drive circuits for lighting up each flasher of said flasher assembly, respectively;
a plurality of current detecting circuits provided in correspondence with said left front part main flasher, said left rear part main flasher, said right front part main flasher, and said right rear part main flasher, each of said current detecting circuits being adapted to detect a load current that flows in each of said correspondence main flashers; and
a control circuit for causing said drive circuits to light up either said left front, rear part, and side part flashers or said right front part, rear part, and side part flashers in response to an operation of a vehicle driver, for comparing a detected result from each of said current detecting circuits corresponding to said lighted flashers with a predetermined common threshold value, and for causing said informing circuit to inform a disconnection state to said vehicle driver when said detected result is less than said common threshold value;
said left side part sub-flasher being connected in parallel to either said left front part main flasher or said left rear part main flasher to define a left parallel circuit;
said current detecting circuit provided in correspondence with said left main flasher connected in parallel to said left side part sub-flasher being adapted to detect a load current that flows in said left parallel circuit including said left side part sub-flasher;
said right side part sub-flasher being connected in parallel to either said right front part main flasher or said right rear part main flasher to define a right parallel circuit; and
said current detecting circuit provided in correspondence with said right main flasher connected in parallel to said right side part sub-flasher being adapted to detect a load current that flows in said right parallel circuit including said right side part sub-flasher.

2. A control device for a vehicle flasher assembly according to Claim 1, further comprising:
a first left connecting terminal to be connected to a first left parallel circuit including either said left front part main flasher or said left rear part main flasher and said left side part sub-flasher;
a second left connecting terminal to be connected to the other left main flasher;
a first right connecting terminal to be connected to a first right parallel circuit including either said right front part main flasher or said right rear part main flasher and said right side part sub-flasher; and
a second left connecting terminal to be connected to the other right main flasher;
said drive circuits comprising:
a left drive circuit for supplying a load current to said first and second left connecting terminals to light up said left front part main flasher, said left rear part main flasher, and said left side part sub-flasher; and
a right drive circuit for supplying a load current to said first and second right connecting terminals to light up said right front part main flasher, said right rear part main flasher, and said right side part sub-flasher;
said plural current detecting circuits comprising:
a first left current detecting circuit for detecting a current that flows in said first left connecting terminal;
a second left current detecting circuit for detecting a current that flows in said second left connecting terminal;
a first right current detecting circuit for detecting a current that flows in said first right connecting terminal; and
a second right current detecting circuit for detecting a current that flows in said second right connecting terminal.

3. A control device for a vehicle flasher assembly according to Claim 1,
wherein a left meter indicating lamp provided on a vehicle meter board is connected in parallel to either said left front part main flasher or said left rear part main flasher that is not connected in parallel to said left side part sub-flasher;
wherein said current detecting circuit provided in correspondence with a flasher connected in parallel to said left meter indicating lamp detects a load current that flows in a parallel circuit including said left meter indicating lamp;
wherein a right meter indicating lamp provided on said vehicle meter board is connected in parallel to either said right front part main flasher or said right rear part main flasher that is not connected in parallel to said right side part sub-flasher;
wherein said current detecting circuit provided in correspondence with a flasher connected in parallel to said right meter indicating lamp detects a load current that flows in a parallel circuit including said right meter indicating lamp.

4. A control device for a vehicle flasher assembly according to Claim 2,
wherein a parallel circuit including said other left main flasher and said left meter indicating lamp provided on said vehicle meter board are connected to said second left connecting terminal; and
wherein a parallel circuit including said other right main flasher and said right meter indicating lamp provided on said vehicle meter board are connected to said second right connecting terminal.

5. A control device for a vehicle flasher assembly according to Claim 3 or 4, wherein said left side part sub-flasher is connected in parallel to said left rear part main flasher, said right side part sub-flasher is connected in parallel to said right rear part main flasher, said left meter indicating lamp is connected in parallel to said left front part main flasher, and said right meter indicating lamp is connected in parallel to said right front part main flasher.

6. A control device for a vehicle flasher assembly according to Claim 2 or 4,
wherein said left drive circuit comprises a first left switching element for supplying a load current through said first left current detecting circuit to said first left connecting terminal, and a second left switching element for supplying a load current through said second left current detecting circuit to said second left connecting terminal; and
wherein said right drive circuit comprises a first right switching element for supplying a load current through said first right current detecting circuit to said first right connecting terminal, and a second right switching element for supplying a load current through said second right current detecting circuit to said second right connecting terminal.

7. A control device for a vehicle flasher assembly according to Claim 2 or 4,
wherein said left drive circuit is a left switching element for supplying a load current through said first left current detecting circuit to said first left connecting terminal and for supplying a load current through said second left current detecting circuit to said second left connecting terminal in parallel; and
wherein said right drive circuit is a right switching element for supplying a load current through said first right current detecting circuit to said first right connecting terminal and for supplying a load current through said second right current detecting circuit to said second right connecting terminal in parallel.

8. A control device for a vehicle flasher assembly according to any one of Claims 3 to 5, wherein said left front part main flasher and said right front part main flasher use a lamp having a load current in a range of 1.8 to 2.3A, said left rear part main flasher and said right rear part main flasher use a lamp having a load current of 1.8A, said left side part sub-flasher and said right side part sub-flasher use a lamp having a load current in a range of 0.1 to 0.4A, said right and left meter indicating lamps use a lamp having a load current of 9 mA, and said threshold value is set to be in a range of 1.1 to 1.2A.
